# EUROPÄISCHE PATENTSCHRIFT

(11) **EP 3 474 304 B1**
(45) Veröffentlichungstag und Bekanntmachung des Hinweises auf die Patenterteilung: **31.08.2022**
(21) Anmeldenummer: 17202141.2
(22) Anmeldetag: 16.11.2017
(51) Int. Cl.: H01H 3/16, F16P 3/08, F16P 3/10, H01H 27/00

(54) **SICHERHEITSSCHALTER**
SAFETY SWITCH
COMMUTATEUR DE SÉCURITÉ

(30) Priorität: 18.10.2017 EP 17197166
(43) Veröffentlichungstag der Anmeldung: 24.04.2019
(73) Patentinhaber: EUCHNER GmbH + Co. KG, 70771 Leinfelden-Echterdingen (DE)
(72) Erfinder: Grimm, Ilo, 71111 Waldenbuch (DE)
(74) Vertreter: Ruckh, Rainer Gerhard

(56) Entgegenhaltungen:
- WO-A1-2015/155744
- US-A- 5 062 668
- US-E- R E34 396

## Beschreibung

Ein derartiger Sicherheitsschalter bildet mit einem zugeordneten Betätiger eine Sicherheitsschalteranordnung, die im Bereich der Sicherheitstechnik eingesetzt wird. Für den Einsatz im Bereich der Sicherheitstechnik, insbesondere im Bereich des Personenschutzes, ist es erforderlich, dass die Sicherheitsschalteranordnung normative Anforderungen hinsichtlich deren Fehlersicherheit aufweist, so dass gewährleistet ist, dass mit der Sicherheitsschalteranordnung eine entsprechend sichere Überwachungsfunktion durchgeführt werden kann. Eine derartige Sicherheitsschalteranordnung kann typischerweise zur Sicherung des Zugangs zu einem Gefahrenbereich eingesetzt werden. Beispielsweise kann mit einer Sicherheitsschalteranordnung eine Verriegelung einer trennenden Schutzeinrichtung, wie einer Schutztür als Zugang zu einem Gefahrenbereich, abgesichert werden. In diesem Fall wird beispielsweise der Betrieb einer gefahrbringenden Anlage innerhalb des Gefahrenbereichs nur dann freigegeben, wenn mit der Sicherheitsschalteranordnung die Schutztür verriegelt ist. Die Freigabe der Anlage kann über eine Sicherheitssteuerung erfolgen, welcher sicherheitsrelevante Schaltsignale der Sicherheitsschalteranordnung zugeführt sind.

Zur Verriegelung der Schutztür wird, wenn sich die Schutztür in ihrer Schließstellung befindet, der Betätiger in Form eines Riegels oder dergleichen in Eingriff mit dem Sicherheitsschalter gebracht, indem beispielsweise der Betätiger in eine Aussparung des Sicherheitsschalters eingefahren wird. Diese Verriegelung wird dadurch kontrolliert, dass mit einem RFID-Lesegerät im Sicherheitsschalter ein Transponder im Betätiger erkannt wird.

Zusätzlich zu dieser Verriegelung kann eine Zuhaltung der Schutztür vorgesehen sein. Eine derartige Zuhaltung ist beispielsweise aus der WO 2016/058718 A1 bekannt. Bei dieser Zuhaltung ist ein Zuhaltebolzen vorgesehen, der mittels eines Elektromotors mit einem Planetengetriebe betätigt wird. Mit dem elektrischen Antrieb kann der Zuhaltebolzen in eine Sperrstellung verfahren werden, in der der Betätiger mit dem Zuhaltebolzen zugehalten wird.

Die WO 2015/155744 A1 betrifft einen Sicherheitsschalter mit einer zugeordneten Betätigungseinheit. Die Betätigungseinheit weist einen Zentrierbolzen auf, der in ein Zentrierlock des Sicherheitsschalters eingeführt werden kann um eine präzise Ausrichtung der Betätigungseinheit relativ zum Sicherheitsschalter zu gewährleisten. Der Zentrierbolzen weist ein Kopfteil und ein anschließendes Verbindungselement zur Lagerung an einem Grundkörper auf. Das Kopfteil weist einen größeren Querschnitt als das Verbindungselement auf. Die Verriegelungsstellung der Betätigungseinheit kann mit zwei zusammenwirkenden Kommunikationselementen geprüft werden, wovon eines als Transponder ausgebildet sein kann.

Die US 5,062,668 A betrifft einen Sicherheitsschließmechanismus für eine Tür, der eine in einem Gehäuse integrierte Verschlusseinheit aufweist. Zur Verriegelung der Tür greift ein Rastbolzen von der Tür in eine Öffnung des Gehäuses. In einer Verriegelungsposition hintergreift ein Sperrelement den Rastbolzen.

Der Erfindung liegt die Aufgabe zugrunde, einen Sicherheitsschalter bereitzustellen, der bei kleiner Baugröße eine zuverlässige Sicherungsfunktion ermöglicht.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen Sicherheitsschalter mit einer Verriegelungseinheit, mittels derer ein zugeordneter Betätiger in einer Verriegelungsstellung gehalten ist. Die Verriegelungseinheit weist eine Öffnung und ein Sperrelement auf. In einer Verriegelungsposition ragt das Sperrelement in die Öffnung und hintergreift einen Betätigerkopf des in der Verriegelungsstellung befindlichen Betätigers. Das Sperrelement ist mittels eines Stellelements mit einer Anstellkraft in der Verriegelungsposition gehalten. Bei Ein- oder Ausführen des Betätigerkopfs über die Öffnung lenkt der Betätigerkopf das Sperrelement gegen die Anstellkraft aus. Die Verriegelungsstellung des Betätigers ist dadurch überwacht, dass Signale eines Transponders im Betätiger in einer Leseeinheit des Sicherheitsschalters erfasst werden, wenn der Betätiger in die Verriegelungsstellung im Sicherheitsschalter eingefahren ist.

Ein wesentlicher Vorteil besteht darin, dass der Sicherheitsschalter eine kleine und kompakte Bauform aufweist.

Der Sicherheitsschalter ist dabei einfach montierbar und kann flexibel in Kombination mit einem Betätiger zur Ausbildung einer Sicherheitsschalteranordnung eingesetzt werden. Die so gebildete Sicherheitsschalteranordnung kann allgemein im Bereich der Sicherheitstechnik eingesetzt werden, insbesondere zur Sicherung des Zugangs zu einem Gefahrenbereich.

Das Funktionsprinzip der Verriegelungseinheit des erfindungsgemäßen Sicherheitsschalters ist derart, dass das Sperrelement in seiner Verriegelungsposition in die Öffnung der Verriegelungseinheit ragt, sodass damit eine verkleinerte Öffnung vorliegt. Das vordere Ende des Betätigers weist eine Querschnittsfläche auf, die größer ist als diese verkleinerte Öffnung, jedoch kleiner als die Öffnung alleine. Wird daher der Betätiger mit seinem vorderen freien Ende durch die verkleinerte Öffnung der Verriegelungseinheit geführt, wird das Sperrelement gegen die Anstellkraft ausgelenkt und kann so die Öffnung passieren. Sobald der Betätiger in seine Verriegelungsstellung eingeführt ist, wird durch die Anstellkraft das Sperrelement wieder in die Verriegelungsposition überführt und ragt in die Öffnung, wodurch das Sperrelement das vordere Ende des Betätigers hintergreift, wodurch eine formschlüssige Verriegelung und Rastung des Betätigers gewährleistet ist.

Besonders vorteilhaft ist der Betätiger derart an die Verriegelungseinheit des Sicherheitsschalters angepasst, dass dieser einen Betätigerkopf aufweist, der über ein Verbindungselement mit einem Grundkörper des Betätigers verbunden ist. Die Längsachse des Verbindungselements ist vorteilhaft in einer stabilen Grundstellung senkrecht zur Oberfläche des Grundkörpers orientiert und weist in axialer Richtung eine hohe Steifigkeit auf. Damit kann der Betätigerkopf mit Anpressdruck gegen das in die Öffnung ragende Sperrelement geführt werden, wodurch das Sperrelement gegen die Anstellkraft ausgelenkt wird und der Betätiger in die Verriegelungsstellung überführt wird. In der Verriegelungsstellung des Betätigers ist dann durch die Anstellkraft das Sperrelement in die Verriegelungsposition überführt und hintergreift den Betätiger so, dass dieser in der Verriegelungsstellung gehalten und eingerastet ist.

Gemäß einer vorteilhaften Ausführungsform ist das Sperrelement von einer Klinke gebildet.

Dabei ist die Klinke mit ihrem unteren Ende in Eingriff mit dem Stellelement. In der Verriegelungsposition ragt das obere Ende der Klinke in die Öffnung, Das obere Ende weist einen kreisförmigen Rand auf, dessen Krümmungsradius dem Radius der Öffnung entspricht.

Die Klinke bildet ein kostengünstiges mechanisches Bauteil, das nur eine kleine Bauform aufweist.

Durch den kreisbogenförmigen Rand des oberen Endes der Klinke ist gewährleistet, dass dann, wenn der Betätigerkopf in der Öffnung eingeschoben wird und dadurch die Klinke aus der Verriegelungsposition ausgelenkt wird, der Rand der Klinke in näherungsweise oder exakt mit einem Randbereich der Öffnung zusammenfällt, sodass die Klinke die Öffnung völlig freigibt und der Betätigerkopf ohne Behinderung durch die Öffnung geschoben werden kann.

Generell ist die Öffnung nicht auf eine kreisförmige Kontur eingeschränkt, sondern kann beliebige Konturen aufweisen. Dementsprechend ist der Rand der Klinke allgemein an die Kontur der Öffnung angepasst.

An die Ausbildung des Sperrelements angepasst ist das Stellelement von einer Wippe gebildet.

Dabei weist die Wippe ein balkenförmiges Ende des Wippenelements auf. An einem ersten längsseitigen Ende des Wippenelements ist eine Schwenklagerung vorgesehen. An der Unterseite des Wippenelements liegt eine Feder an, welche die Anstellkraft für das Sperrelement generiert.

Die Wippe weist einen einfachen Aufbau mit nur wenigen Einzelteilen auf. Das so gebildete Stellelement kann in kleinen Bauformen realisiert werden. Die Anstellkraft wird mit der auf das Wippenelement wirkenden Feder mit sehr einfachen Mitteln realisiert.

Bei dieser Ausführungsform wird das Sperrelement durch eine Schwenkbewegung in die Verriegelungsposition geführt. Generell sind auch Stellelemente denkbar die durch Schubbewegungen oder dergleichen das Sperrelement in die Verriegelungsposition überführen.

Um eine gute Übertragung der Anstellkraft auf das Sperrelement zu gewährleisten, ist es zweckmäßig, dass die Feder in einem zentralen Bereich des Wippenelements an dessen Unterseite anliegt. In diesem Bereich liegt das untere Ende der Klinke auf der Oberseite des Wippenelements auf.

Ein weiterer Vorteil besteht darin, dass die Anstellkraft durch Vorspannen der Feder einstellbar ist.

Damit ist eine einfache Anpassung an unterschiedliche Applikationen, insbesondere unterschiedliche Betätiger, möglich.

Gemäß einer vorteilhaften Ausführungsform der Erfindung ist der Verriegelungseinheit eine Zuhalteeinheit zugeordnet. Mittels der Zuhalteeinheit ist das Sperrelement in seiner Verriegelungsposition zugehalten.

Mit dieser Zuhaltung wird eine weitere Sicherheitsfunktion des Sicherheitsschalters bereitgestellt.

Vorteilhaft weist die Zuhalteeinheit einen Klappankermagneten auf, welcher einen Elektromagneten und einen mit dem Elektromagneten auslenkbaren Anker aufweist. Der Anker ist in eine Zuhaltestellung einbringbar. In der Zuhaltestellung verriegelt der Anker die Wippe.

Der Klappankermagnet bildet eine kompakte Einheit, mit der eine zuverlässige Zuhaltung bewirkt werden kann. Die Zuhaltung erfolgt auf einfache Weise dadurch, dass der Anker des Klappankermagnets in Eingriff mit der Wippe gebracht wird.

Dies lässt sich besonders einfach dadurch realisieren, dass die Wippe an ihrem zweiten freien Ende eine Rastnase aufweist. Der Anker ist in der Zuhaltestellung in Eingriff mit dieser Rastnase.

Besonders vorteilhaft ist der Anker um eine Schwenkachse schwenkbar. Ein Schwenkarm bildet einen Hebel aus, der in Eingriff mit der Wippe gebracht werden kann. Ein zweiter Schwenkarm bildet ein Gegengewicht. Mittels des Gegengewichts wird eine verbesserte Schockstabilität erzielt.

Durch die verbesserte Schockstabilität bleibt die Funktion des Klappankermagnets bei Einwirkung äußerer Kräfte weitgehend unbeeinflusst.

Der erfindungsgemäße Sicherheitsschalter bildet mit dem Betätiger eine Sicherheitsschalteranordnung für den Einsatz im Bereich der Sicherheitstechnik.

Vorteilhaft ist der Betätigerkopf kugelförmig ausgebildet.

Dabei weist der Betätiger einen Grundkörper auf, der über ein Verbindungselement mit dem Betätigerkopf verbunden ist, wobei die Querschnittsfläche des Verbindungselements kleiner ist als die Querschnittsfläche des Betätigerkopfs.

Die Konstruktionen des Sicherheitsschalters und des Betätigers sind aufeinander abgestimmt um eine optimale Funktion zu gewährleisten. Insbesondere ist die Geometrie der Öffnung an die Form des Betätigerkopfs angepasst.

Weiterhin ist die Verriegelungsstellung des Betätigers dadurch überwacht, dass Signale eines Transponders im Betätiger in einer Leseeinheit des Sicherheitsschalters erfasst werden.

Durch diese Überwachungsfunktion können Fehler bei der Verriegelung des Betätigers aufgedeckt werden. Dies stellt eine wesentliche Maßnahme zur Erfüllung des für den Einsatz der Sicherheitsschalteranordnung im Bereich der Sicherheitstechnik geforderten Sicherheitsniveaus dar.

Die Erfindung wird im Folgenden anhand der Zeichnungen erläutert. Es zeigen:
- Figur 1: Ausführungsbeispiel der erfindungsgemäßen Sicherheitsschalteranordnung mit einem Sicherheitsschalter und einem Betätiger.
- Figur 2 a - c: Unterschiedliche Zustände der Verriegelungseinheit und Zuhalteeinheit des Sicherheitsschalter der Sicherheitsschalteranordnung gemäß Figur 1 bei Einführen des Betätigers in eine Verriegelungsstellung.

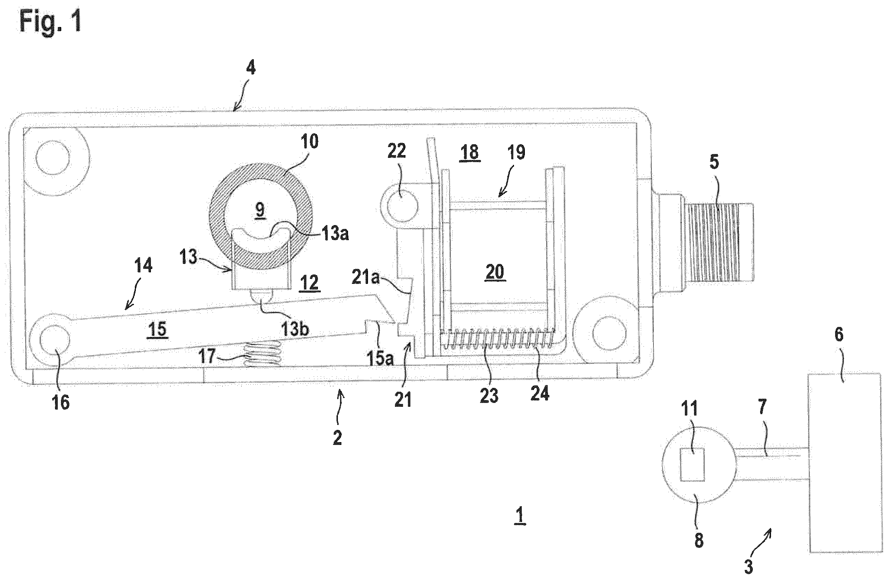

Figur 1 zeigt schematisch ein Ausführungsbeispiel einer Sicherheitsschalteranordnung 1 mit einem Sicherheitsschalter 2 und einem Betätiger 3.

Mit dieser Sicherheitsschalteranordnung 1 erfolgt beispielsweise die Sicherung einer Schutztür als Zugang zu einem Gefahrenbereich. Der Betätiger 3 kann an der Schutztür angeordnet sein, der Sicherheitsschalter 2 kann an einen die Türöffnung, die mit der Schutztür verschlossen wird, begrenzenden Rahmen angeordnet werden.

Die Komponenten des Sicherheitsschalters 2 sind in einem Gehäuse 4 integriert, an dem ein Kabelanschluss 5 zum Anschluss an externe Einheiten ausmündet.

Wie aus Figur 1 ersichtlich, weist der Betätiger 3 einen Grundkörper 6 auf, in welchem ein Verbindungselement 7 gelagert ist. Das Verbindungselement 7 ist von einem langgestreckten Körper gebildet, dessen Querschnitt über seine gesamte Länge zumindest näherungsweise konstant ist.

Das Verbindungselement 7 ist mit seinem ersten freien Ende so im Grundkörper 6 gelagert, dass die Längsachse des Verbindungselements 7 senkrecht zur Oberfläche des Grundkörpers 6 orientiert ist. Am anderen Ende des Verbindungselements 7 ist ein Betätigerkopf 8 gelagert. Der Betätigerkopf 8 ist im vorliegenden Fall kugelförmig ausgebildet. Prinzipiell kann der Betätigerkopf 8 auch von einem anderen rotationssymmetrischen Körper gebildet sein. Prinzipiell kann der Betätigerkopf 8 auch einen ovalen oder polygonalen Querschnitt aufweisen. In jedem Fall weist der Betätigerkopf 8 eine größere Querschnittsfläche als das Verbindungselement 7 auf, so dass der Betätigerkopf 8 in seiner gesamten Querschnittsebene über das Verbindungselement 7 hervorsteht.

Allgemein besteht das Verbindungselement 7 aus einem Werkstoff, der eine hohe Steifigkeit des Verbindungselements 7 in axialer Richtung gewährleistet und der das Verbindungselement 7 in der in Figur 1 dargestellten Grundstellung, insbesondere bei Einwirken der Schwerkraft hält.

An einer Seitenwand des Sicherheitsschalters 2 ist eine Öffnung 9 vorgesehen, an welcher ein Hohlraum im Sicherheitsschalter 2 ausmündet, in welchen der Betätigerkopf 8 eingeführt werden kann, sodass sich dann der Betätiger 3 in seiner Verriegelungsstellung befindet.

Die Öffnung 9 ist kreisförmig ausgebildet. Im Randbereich der Seitenwand, die die Öffnung 9 begrenzt ist eine Lesespule 10 vorgesehen. Die Lesespule 10 ist auf einer nicht gesondert dargestellten Leiterplatte gelagert und bildet eine Leseeinheit, spezifisch eine RFID-Leseeinheit aus. Korrespondierend hierzu ist im Betätigerkopf 8 ein Transponder 11 gelagert. Generell kann der Transponder 11 auch im Grundkörper 6 des Betätigers 3 vorgesehen sein.

Mit der Lesespule 10 können Signale des Transponders 11 im Betätigerkopf 8 erfasst werden, wenn der Betätiger 3 in die Verriegelungsstellung im Sicherheitsschalter 2 eingefahren ist, wodurch die Verriegelungsstellung des Betätigers 3 überprüfbar ist.

Zur sicheren Verriegelung und Rastung des Betätigers 3 in seiner Verriegelungsstellung weist der Sicherheitsschalter 2 eine Verriegelungseinheit 12 auf. Die Verriegelungseinheit 12 weist ein Sperrelement in Form einer Klinke 13 auf, die mit ihrem oberen Ende in den Bereich der Öffnung 9 eingefahren werden kann.

Die Klinke 13 besteht aus einem flächigen Bauteil, welches an seinem oberen Ende mit einem kreisbogenförmigen Rand 13a abgeschlossen ist. Am unteren Rand ist ein konvexes Auflageelement 13b vorgesehen. Dieses bildet eine mechanische Ankopplung zu einem Stellelement aus. Die Klinke 13 ist in axialer Richtung, das heißt in vertikaler Richtung, verschiebbar gelagert. Vorzugsweise sind hierzu nicht dargestellte Führungen vorgesehen.

Das Stellelement ist in Form einer Wippe 14 ausgebildet, die ein balkenförmiges Wippenelement 15 aufweist. An einem ersten längsseitigen Ende des Wippenelements 15 ist eine Schwenklagerung 16 vorgesehen, sodass das Wippenelement 15 um eine durch die Schwenklagerung 16 verlaufende Schwenkachse schwenkbar ist. Am zweiten längsseitigen Ende des Wippenelements 15 ist eine Rastnase 15a vorgesehen.

Der so ausgebildeten Wippe 14 ist eine Feder 17 zugeordnet, deren Längsachse in vertikaler Richtung verläuft und deren unteres Ende auf einer stationären Unterlage gelagert ist. Das obere Ende der Feder 17 liegt in einem zentralen Bereich des Wippenelements 15 an dessen Unterseite an. Das Auflageelement 13b der Klinke 13 liegt im selben Bereich des Wippenelements 15 auf dessen Oberseite auf. Wie aus Figur 1 ersichtlich ist das Auflageelement 13b entlang der Längsachse der Feder 17 angeordnet. Die Federkraft der Feder 17 bewirkt eine Anstellkraft, die vom Wippenelement 15 auf die Klinke 13 übertragen wird, sodass die Klinke 13 nach oben gedrückt wird und mit ihrem oberen Rand 13a in die Öffnung 9 ragt. Diese in Figur 1 dargestellte Position ist die Rast- und Verriegelungsposition der Klinke 13.

Durch ein geeignetes Vorspannen der Feder 17 kann die Anstellkraft eingestellt werden.

Dieser Verriegelungseinheit 12 ist eine Zuhalteeinheit 18 zugeordnet, mittels derer eine Zuhaltung der Klinke 13 bewirkt werden kann.

Die Zuhalteeinheit 18 weist einen Klappankermagneten 19 auf, welcher einen Elektromagneten 20 und einen Anker 21 aufweist. Der Anker 21 ist in Form eines Hebels ausgebildet, der einen Schwenkarm 21a ausbildet, der um eine Schwenklagerung 22 geschwenkt werden kann. Die Anordnung kann von einem zweiten, nicht dargestellten Schwenkarm erweitert sein, der ein Gegengewicht zum Hebel bildet und so zu einer verbesserten Schockstabilität des Klappankermagneten 19 führt. Der Klappankermagnet 19 weist weiterhin ein auf einem Führungssegment 23 des Elektromagneten 20 gelagertes Federelement 24 auf. Damit kann durch Bestromen des Elektromagneten 20 der Anker 21 ausgelenkt werden. Eine Zuhaltung der Verriegelungseinheit 12 wird dadurch bewirkt, dass der Anker 21 ausgelenkt wird, sodass er an der Rastnase 15a des Wippenelements 15 einrastet. Der Klappankermagnet 19 kann generell in unterschiedlichen Ausführungsformen ausgebildet sein und nach dem Arbeitsstromprinzip oder Ruhestromprinzip arbeiten. Auch ist die Ausbildung als bistabiler Magnet möglich.

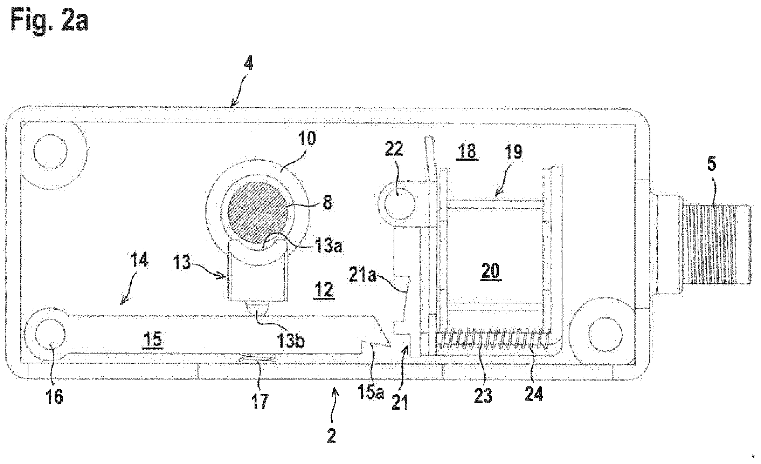

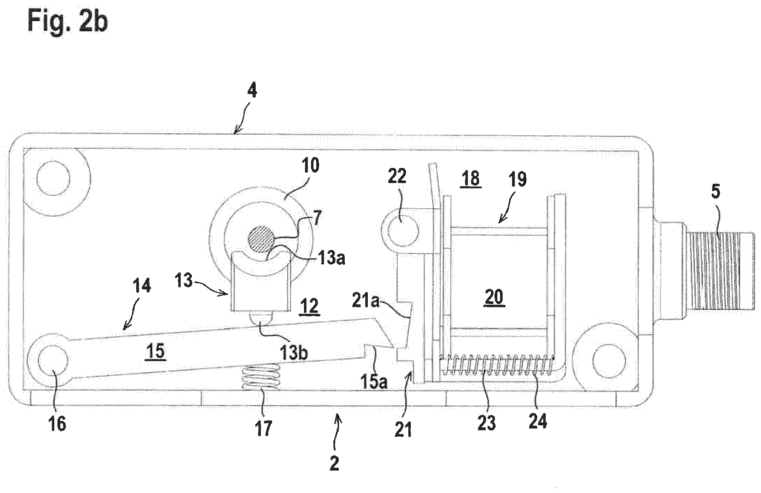

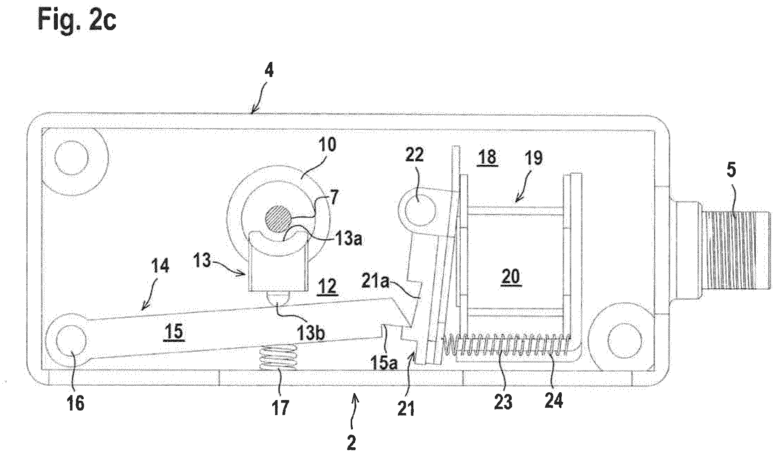

Die Funktionsweise der Verriegelung und Zuhaltung der Sicherheitsschalteranordnung 1 wird anhand der Figuren 2 a - c erläutert.

Im Ausgangszustand, beispielsweise bei geöffneter Schutztür, liegt der Betätiger 3 in Abstand zur Schutztür. Bei Schließen der Schutztür wird der Betätiger 3 in eine Verriegelungseinheit 12 im Sicherheitsschalter 2 eingefahren.

Hierzu wird der Betätiger 3 mit dem Betätigerkopf 8 gegen die Öffnung 9 im Sicherheitsschalter 2 gefahren, wobei sich in diesem Ausgangszustand die Klinke 13 in der Verriegelungsposition befindet und in die Öffnung 9 ragt.

Bei Einführen des Betätigerkopfs 8 in die Öffnung 9 des Sicherheitsschalters 2 wird durch die Anpresskraft des Betätigerkopfs 8 die Klinke 13 aus der Verriegelungsposition nach unten gedrückt, da der Durchmesser des Betätigerkopfs 8 an den Innendurchmesser der Öffnung 9 angepasst ist und diese nahezu vollständig ausfüllt. Diese Situation ist in Figur 2a dargestellt. Der Betätigerkopf 8 liegt in der Öffnung 9, die Klinke 13 ist aus der Verriegelungsposition gegen die Federkraft der Feder 17 nach unten geschoben, sodass der obere kreisförmig gebogene Rand 13a im Randbereich der Öffnung 9 liegt. Hier ist vorteilhaft, dass der Krümmungsradius des oberen Randes 13a der Klinke 13 dem Radius der Öffnung 9 entspricht, sodass die Randkontur der Klinke 13 näherungsweise oder exakt der Randkontur der Öffnung 9 entspricht. Generell kann die Öffnung auch eine nicht kreisförmige Kontur aufweisen, wobei auch dann der Rand 13a an diese Kontur angepasst ist.

Der Betätiger 3 wird dann weiter in eine Verriegelungsstellung eingeschoben, sodass der Betätigerkopf 8 vollständig in dem an die Öffnung 9 anschließenden Hohlraum liegt. Dann liegt, wie Figur 2b zeigt, das Verbindungselement 7 im Bereich der Öffnung 9. Da der Durchmesser des Verbindungselements 7 kleiner ist als der Durchmesser des Betätigerkopfs 8, wird nun durch die Federkraft der Feder 17 die Klinke 13 nach oben in die Verriegelungsposition geschoben (Figur 2b) und sichert und rastet den Betätigerkopf 8 in der Verriegelungsstellung. Durch Lesen der Signale des Transponders 11 in der Leseeinheit ist die Rast- und Verriegelungsstellung des Betätigers 3 überwacht. In der Rast- und Verriegelungsstellung hintergreift die Klinke 13 den Betätigerkopf 8 und hält somit den Betätiger 3 in der Verriegelungsstellung.

Die Zuhaltung ist bei der in Figur 2b dargestellten Situation noch nicht aktiviert, das heißt der Anker 21 des Klappankermagneten 19 ist auch nicht in Eingriff mit der Rastnase 15a des Wippenelements 15 der Wippe 14. Somit ist ein Entriegeln des Betätigers 3 noch möglich, das heißt der Betätiger 3 kann unter Krafteinwirkung aus der Rast- und Verriegelungsstellung herausgezogen werden, wobei dann, wenn der Betätigerkopf 8 die Öffnung 9 des Sicherheitsschalters 2 passiert, die Klinke 13 gegen die Federkraft aus der Verriegelungsposition nach unten gedrückt wird.

Figur 2c schließlich zeigt die Situation, wenn der Betätiger 3 in die Verriegelungsstellung eingeführt ist und die Zuhaltung aktiviert ist. In der Verriegelungsstellung hintergreift die Klinke 13 in der Verriegelungsposition den Betätigerkopf 8 und hält den Betätiger 3 in der Verriegelungsstellung.

Die Zuhaltung ist derart aktiviert, dass mittels des Elektromagneten 20 der Anker 21 ausgelenkt ist und in die Rastnase 15a der Wippe 14 greift. Damit ist die Wippe 14 fixiert. Durch die fixierte Wippe 14 kann sich der Betätiger 3 nicht mehr aus der Verriegelungsstellung bewegen, da die Wippe 14 die Klinke 13 gegen eine Bewegung aus der Verriegelungsposition heraus sichert. Ein Herauslösen des Betätigers 3 ist somit erst dann wieder möglich, wenn die Zuhaltung deaktiviert ist, das heißt der Anker 21 nicht mehr in Eingriff mit der Rastnase 15a ist.

Bei einer Sicherung einer Schutztür als Zugang zu einem Gefahrenbereich mittels der erfindungsgemäßen Sicherheitsschalteranordnung 1 kann der Sicherheitsschalter 2 dann, wenn eine Verriegelung und Zuhaltung des Betätigers 3 gegeben ist, ein Schaltsignal ausgeben, das zur Freigabe des Betriebes einer gefahrbringenden Anlage im Gefahrenbereich genutzt werden kann.

### Bezugszeichenliste

- (1): Sicherheitsschalteranordnung
- (2): Sicherheitsschalter
- (3): Betätiger
- (4): Gehäuse
- (5): Kabelanschluss
- (6): Grundkörper
- (7): Verbindungselement
- (8): Betätigerkopf
- (9): Öffnung
- (10): Lesespule
- (11): Transponder
- (12): Verriegelungseinheit
- (13): Klinke
- (13a): Rand
- (13b): Auflageelement
- (14): Wippe
- (15): Wippenelement
- (15a): Rastnase
- (16): Schwenklagerung
- (17): Feder
- (18): Zuhalteeinheit
- (19): Klappankermagnet
- (20): Elektromagnet
- (21): Anker
- (21a): Schwenkarm
- (22): Schwenklagerung
- (23): Führungssegment
- (24): Federelement

## Patentansprüche

1. Sicherheitsschalter (2) mit einer Verriegelungseinheit (12), mittels derer ein zugeordneter Betätiger (3) in einer Verriegelungsstellung gehalten ist, **dadurch gekennzeichnet, dass** die Verriegelungseinheit (12) eine Öffnung (9) und ein Sperrelement aufweist, wobei in einer Verriegelungsposition das Sperrelement in die Öffnung (9) ragt und einen Betätigerkopf (8) des in der Verriegelungsstellung befindlichen Betätigers (3) hintergreift, dass das Sperrelement mittels eines Stellelements mit einer Anstellkraft in der Verriegelungsposition gehalten ist, und dass bei Ein- oder Ausführen des Betätigerkopfs (8) über die Öffnung (9) der Betätigerkopf (8) das Sperrelement gegen die Anstellkraft auslenkt, dass die Verriegelungsstellung des Betätigers (3) dadurch überwacht ist, dass Signale eines Transponders (11) im Betätiger (3) in einer Leseeinheit des Sicherheitsschalters (2) erfasst werden, wenn der Betätiger (3) in die Verriegelungsstellung im Sicherheitsschalter (2) eingefahren ist.

2. Sicherheitsschalter (2) nach Anspruch 1, **dadurch gekennzeichnet, dass** das Sperrelement von einer Klinke (13) gebildet ist.

3. Sicherheitsschalter (2) nach Anspruch 2, **dadurch gekennzeichnet, dass** die Klinke (13) mit ihrem unteren Ende in Eingriff mit dem Stellelement ist, und dass in der Verriegelungsposition das obere Ende der Klinke (13) in die Öffnung (9) ragt, wobei das obere Ende einen kreisförmigen Rand (13a) aufweist, der an die Kontur der Öffnung (9) angepasst ist.

4. Sicherheitsschalter (2) nach einem der Ansprüche 1 - 3, **dadurch gekennzeichnet, dass** das Stellelement von einer Wippe (14) gebildet ist.

5. Sicherheitsschalter (2) nach Anspruch 4, **dadurch gekennzeichnet, dass** die Wippe (14) ein balkenförmiges Wippenelement (15) aufweist, wobei an einem ersten längsseitigen Ende des Wippenelements (15) eine Schwenklagerung (16) vorgesehen ist, und wobei an der Unterseite des Wippenelements (15) eine Feder (17) anliegt, welche die Anstellkraft für das Sperrelement generiert.

6. Sicherheitsschalter (2) nach Anspruch 5, **dadurch gekennzeichnet, dass** die Feder (17) in einem zentralen Bereich des Wippenelements (15) an dessen Unterseite anliegt, und dass in diesem Bereich das untere Ende der Klinke (13) auf der Oberseite des Wippenelements (15) aufliegt.

7. Sicherheitsschalter (2) nach einem der Ansprüche 5 und 6, **dadurch gekennzeichnet, dass** die Anstellkraft durch Vorspannen der Feder (17) einstellbar ist.

8. Sicherheitsschalter (2) nach einem der Ansprüche 1 - 7, **dadurch gekennzeichnet, dass** die Geometrie der Öffnung (9) an die Form des Betätigerkopfs (8) angepasst ist, wobei insbesondere der Betätigerkopf (8) kugelförmig ausgebildet ist oder einen ovalen oder polygonalen Querschnitt aufweist.

9. Sicherheitsschalter (2) nach einem der Ansprüche 1 - 8, **dadurch gekennzeichnet, dass** der Verriegelungseinheit (12) eine Zuhalteeinheit (18) zugeordnet ist, mittels derer das Sperrelement in seiner Verriegelungsposition zugehalten ist.

10. Sicherheitsschalter (2) nach Anspruch 9, **dadurch gekennzeichnet, dass** die Zuhalteeinheit (18) einen Klappankermagneten (19) aufweist, welcher einen Elektromagneten (20) und einen mit dem Elektromagneten (20) auslenkbaren Anker (21) aufweist, wobei der Anker (21) in eine Zuhaltestellung einbringbar ist, in welcher der Anker (21) die Wippe (14) blockiert.

11. Sicherheitsschalter (2) nach Anspruch 10, **dadurch gekennzeichnet, dass** die Wippe (14) an ihrem zweiten freien Ende eine Rastnase (15a) aufweist, wobei der Anker (21) in der Zuhaltestellung in Eingriff mit dieser Rastnase (15a) ist.

12. Sicherheitsschalter (2) nach einem der Ansprüche 10 oder 11, **dadurch gekennzeichnet, dass** der Anker (21) um eine Schwenkachse schwenkbar ist, wobei ein Schwenkarm (21a) einen Hebel ausbildet, der in Eingriff mit der Wippe (14) gebracht werden kann, und wobei ein zweiter Schwenkarm ein Gegengewicht bildet, mittels dessen eine verbesserte Schockstabilität erzielt wird.

13. Sicherheitsschalteranordnung (1) mit einem Betätiger (3) und einem Sicherheitsschalter (2) gemäß den Ansprüchen 1 bis 12.

14. Sicherheitsschalteranordnung (1) nach Anspruch 13, **dadurch gekennzeichnet, dass** der Betätiger (3) einen Grundkörper (6) aufweist, der über ein Verbindungselement (7) mit dem Betätigerkopf (8) verbunden ist, wobei die Querschnittsfläche des Verbindungselements (7) kleiner ist als die Querschnittsfläche des Betätigerkopfes (8).

## Claims

1. Safety switch (2) with a locking unit (12), by means of which an associated actuator (3) is retained in a locking setting, **characterised in that** the locking unit (12) has an opening (9) and a blocking element, wherein in a locking position the blocking element projects into the opening projects into the opening (9) and engages behind an actuator head (8) of the actuator (3) disposed in the locking setting, that the blocking element is retained in the locking position by means of a setting element with an adjusting force, and that on introduction or removal of the actuator head (8) via the opening (9) of the actuator head (8) the blocking element is deflected against the adjusting force, that the locking setting of the actuator (3) is monitored by signals of a transponder (11) in the actuator (3) being detected in a reader unit of the safety switch (2) when the actuator (3) is moved into the locking setting in the safety switch (2).

2. Safety switch (2) according to claim 1, **characterised in that** the blocking element is formed by a latch (13).

3. Safety switch (2) according to claim 2, **characterised in that** the latch (13) is in engagement by the lower end thereof with the setting element and that in the locking position the upper end of the latch (13) projects into the opening (9), wherein the upper end has a circular edge (13a) matched to the contour of the opening (9).

4. Safety switch (2) according to any one of claims 1 to 3, **characterised in that** the setting element is formed by a rocker (14).

5. Safety switch (2) according to claim 4, **characterised in that** the rocker (14) comprises a bar-shaped rocker element (15), wherein a pivot mount (16) is provided at a first longitudinal-side end of the rocker element (15) and wherein a spring (17) which generates the adjusting force for the blocking element bears against the lower side of the rocker element (14).

6. Safety switch (2) according to claim 5, **characterised in that** the spring (17) bears in a central region of the rocker element (15) against the lower side thereof and that in this region the lower end of the latch (13) rests on the upper side of the rocker element (15).

7. Safety switch (2) according to one of claims 5 and 6, **characterised in that** the adjusting force is settable by biasing the spring (17).

8. Safety switch (2) according to any one of claims 1 to 7, **characterised in that** the geometry of the opening (9) is adapted to the shape of the actuator head (8), wherein, in particular, the actuator head (8) is of spherical form or as an oval or polygonal cross-section.

9. Safety switch (2) according to any one of claims 1 to 8, **characterised in that** a retaining unit (18) by means of which the blocking element is retained in its locking position is associated with the locking unit (12).

10. Safety switch (2) according to claim 9, **characterised in that** the retaining unit (18) comprises a hinged armature magnet (19), which comprises an electromagnet (20) and an armature (21) deflectable by the electromagnet (20), wherein the armature (21) can be brought into a retention setting in which the armature (21) blocks the rocker (14).

11. Safety switch (2) according to claim 10, **characterised in that** the rocker (14) has a detent lug (15a) at its second free end, where the armature (21) in the retention setting is in engagement with this detent lug (15a).

12. Safety switch (2) according to one of claims 10 and 11, **characterised in that** the armature (21) is pivotable about a pivot axis, wherein a pivot arm (21a) forms a lever which can be brought into engagement with the rocker (14) and wherein a second pivot arm forms a counterweight by means of which an improved shock stability is achieved.

13. Safety switch arrangement (1) with an actuator (3) and a safety switch (2) according any one of claims 1 to 12.

14. Safety switch arrangement (1) according to claim 13, **characterised in that** the actuator (3) comprises a base body (6) connected with the actuator head (8) by way of a connecting element (7), wherein the cross-sectional area of the connecting element (7) is smaller than the cross-sectional area of the actuator head (8).

## Revendications

1. Interrupteur de sécurité (2) avec une unité de verrouillage (12) au moyen de laquelle un actionneur (3) associé est maintenu dans une position de verrouillage, **caractérisé en ce que** l'unité de verrouillage (12) présente une ouverture (9) et un élément de blocage, l'élément de blocage faisant saillie dans l'ouverture (9) dans une position de verrouillage et s'engageant derrière une tête d'actionneur (8) de l'actionneur (3) se trouvant dans la position de verrouillage, **en ce que** l'élément de blocage est maintenu dans la position de verrouillage avec une force d'application au moyen d'un élément de réglage, et **en ce que**, lors de l'entrée ou de la sortie de la tête d'actionneur (8) par l'ouverture (9), la tête d'actionneur (8) dévie l'élément de blocage à l'encontre de la force d'application, **en ce que** la position de verrouillage de l'actionneur (3) est surveillée par le fait que des signaux d'un transpondeur (11) dans l'actionneur (3) sont détectés dans une unité de lecture de l'interrupteur de sécurité (2) lorsque l'actionneur (3) est rentré dans la position de verrouillage dans l'interrupteur de sécurité (2).

2. Interrupteur de sécurité (2) selon la revendication 1, **caractérisé en ce que** l'élément de blocage est formé par un cliquet (13).

3. Interrupteur de sécurité (2) selon la revendication 2, **caractérisé en ce que** le cliquet (13) est en prise avec l'élément de réglage par son extrémité inférieure, et **en ce que**, dans la position de verrouillage, l'extrémité supérieure du cliquet (13) fait saillie dans l'ouverture (9), l'extrémité supérieure présentant un bord circulaire (13a) qui est adapté au contour de l'ouverture (9).

4. Interrupteur de sécurité (2) selon l'une des revendications 1 à 3, **caractérisé en ce que** l'élément de réglage est formé par une bascule (14).

5. Interrupteur de sécurité (2) selon la revendication 4, **caractérisé en ce que** la bascule (14) présente un élément de bascule (15) en forme de poutre, un palier de pivotement (16) étant prévu à une première extrémité longitudinale de l'élément de bascule (15), et un ressort (17) s'appuyant sur la face inférieure de l'élément de bascule (15), lequel génère la force d'application pour l'élément de blocage.

6. Interrupteur de sécurité (2) selon la revendication 5, **caractérisé en ce que** le ressort (17) s'appuie dans une zone centrale de l'élément de bascule (15) sur sa face inférieure, et **en ce que**, dans cette zone, l'extrémité inférieure du cliquet (13) repose sur la face supérieure de l'élément de bascule (15).

7. Interrupteur de sécurité (2) selon l'une des revendications 5 et 6, **caractérisé en ce que** la force d'application est réglable par précontrainte du ressort (17).

8. Interrupteur de sécurité (2) selon l'une des revendications 1 à 7, **caractérisé en ce que** la géométrie de l'ouverture (9) est adaptée à la forme de la tête d'actionneur (8), la tête d'actionneur (8) étant en particulier de forme sphérique ou présentant une section transversale ovale ou polygonale.

9. Interrupteur de sécurité (2) selon l'une des revendications 1 à 8, **caractérisé en ce qu'**une unité de maintien (18) est associée à l'unité de verrouillage (12), au moyen de laquelle l'élément de blocage est maintenu dans sa position de verrouillage.

10. Interrupteur de sécurité (2) selon la revendication 9, **caractérisé en ce que** l'unité de maintien (18) présente un aimant à armature battante (19) qui présente un électroaimant (20) et une armature (21) pouvant être déviée avec l'électroaimant (20), l'armature (21) pouvant être mise dans une position de maintien dans laquelle l'armature (21) bloque la bascule (14).

11. Interrupteur de sécurité (2) selon la revendication 10, **caractérisé en ce que** la bascule (14) présente un ergot d'encliquetage (15a) à sa deuxième extrémité libre, l'armature (21) étant en prise avec cet ergot d'encliquetage (15a) dans la position de maintien.

12. Interrupteur de sécurité (2) selon l'une des revendications 10 ou 11, **caractérisé en ce que** l'armature (21) peut pivoter autour d'un axe de pivotement, un bras pivotant (21a) formant un levier pouvant être mis en prise avec la bascule (14), et un deuxième bras pivotant formant un contrepoids au moyen duquel on obtient une meilleure stabilité aux chocs.

13. Ensemble interrupteur de sécurité (1) comprenant un actionneur (3) et un interrupteur de sécurité (2) selon les revendications 1 à 12.

14. Ensemble interrupteur de sécurité (1) selon la revendication 13, **caractérisé en ce que** l'actionneur (3) présente un corps de base (6) qui est relié à la tête d'actionneur (8) par un élément de liaison (7), la surface de section transversale de l'élément de liaison (7) étant plus petite que la surface de section transversale de la tête d'actionneur (8).
